# EUROPEAN PATENT APPLICATION

(11) **EP 4 621 328 A1**
(43) Date of publication of application: **24.09.2025**
(21) Application number: 24165235.3
(22) Date of filing: 21.03.2024
(51) Int. Cl.: F25D 23/02, E05F 5/04, E05F 5/08, F25D 29/00, H05K 5/02

(54) **ANTI-DOOR-BUMPING KIT FOR A COOLING DEVICE AND METHOD FOR PREVENTING DOOR BUMPING IN A COOLING DEVICE**

(71) Applicant: Beko Europe Management S.r.l., 20156 Milano (MI) (IT)
(72) Inventor: PIERAGOSTINI, Fabrizio, 20156 Milano (IT); RICCARDI, Roberto, 20156 Milano (IT); GRZYB, Jozef, 20156 Milano (IT); OLIVANI, Andrea, 20156 Milano (IT)
(74) Representative: Buzzi, Notaro & Antonielli d'Oulx S.p.A.

(57) **Abstract**

Here described is an anti-door-bumping kit (10) for a cooling device, such as, e.g., a refrigerator, comprising:
- a spring-operated catch unit (20) for elastically retaining a door of the cooling device to prevent door bumping, while enabling opening and closing of the door during its normal use, and
- a support (40) having an outer boundary surface (44) intended to face the door of the cooling device in the installed condition of the kit (10), the catch unit (20) being mounted on the support so as to project from the outer boundary surface (44) of the support (40) in a catching direction (Z) transversal to the outer boundary surface (44),

wherein the support (40) has fixing parts (42) for fixing the kit (10) to the cooling device, or to a cabinet inside which the cooling device is housed, and
wherein the catch unit (20) is mounted on the support (40) so as to enable to adjust the length of its portion projecting from the outer boundary surface (44) of the support (40) in the catching direction (Z), for bringing the catch unit into engagement with the door of the cooling device when installing the kit.

## Description

### Technical field of the invention

The present invention relates to an anti-door-bumping kit for a cooling device, such as, for example, a refrigerator.

The door bumping is a phenomenon mainly occurring in no-frost refrigerators and consisting in the unintentional opening of the freezer compartment's door as a result of an abrupt closing of the fridge compartment's door or vice versa.

The reason of this phenomenon lies in that, in this kind of refrigerators, the fridge compartment and the freezer compartment are in fluid communication with each other, so that an abrupt closing of the fridge compartment's door causes a pressure pulse that is transmitted as far as to the freezer compartment and pushes open its door.

This phenomenon usually affects the door of the freezer compartment, since such a door is smaller and the pressure pulses generated by the bigger door of the fridge compartment may be intense enough to open it.

The present invention aims to provide an anti-door-bumping kit for preventing occurrence of the door bumping phenomenon indicated above.

### Summary of the invention

The present invention relates in a general way to an anti-door-bumping kit according to Claim 1.

The present invention also relates to a method according to Claim 9.

The claims form an integral part of the teachings provided here.

### Brief description of the drawings and detailed description of one or more embodiments of the invention

Further characteristics and advantages of the invention will be apparent from the following description, which refers to the attached drawings provided purely by way of non-limiting example, in which:
- Figure 1 shows a preferred embodiment of the kit described here, according to a perspective view;
- Figure 2 shows the Kit of Figure 1 in the installed condition;

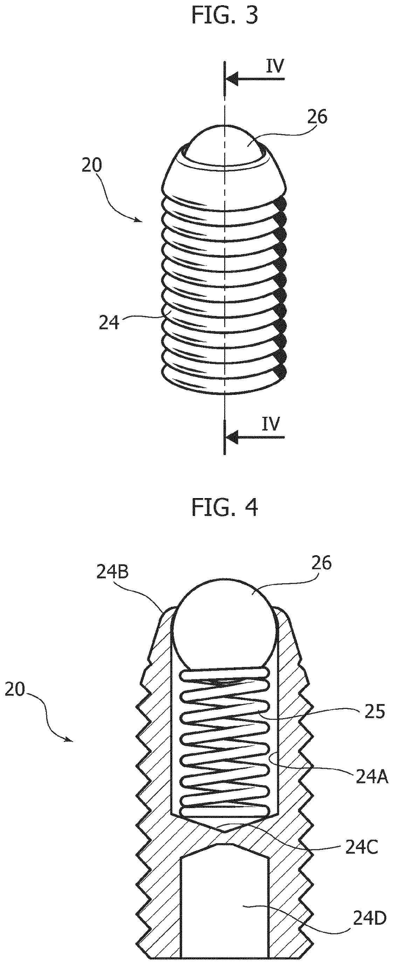

- Figure 3 shows a component of the kit of Figure 1;
- Figure 4 shows a cross section view of the component of Figure 3, along section plane IV-IV illustrated in Figure 3.

The following description illustrates various specific details intended to provide a deeper understanding of the embodiments. The embodiments may be realized without one or more of the specific details, or with other methods, components or materials, etc. In other cases, known structures, materials or operations are not shown or described in detail, to avoid obscuring various aspects of the embodiment.

The references used here are purely for convenience and therefore do not define the scope of protection or the extent of the embodiments.

As mentioned above, the kit described here is for preventing door bumping in a cooling device, for example a refrigerator.

In the following, for illustrative purposes reference is made to a typical household refrigerator comprising an upper fridge compartment and a lower freezer compartment; as common in household contexts the refrigerator may be housed inside a furniture cabinet covering the refrigerator from outside for aesthetic purposes.

However, it is to be understood that the teachings provided here are generally valid for preventing door bumping in any cooling device that can be affected by this technical problem.

Now with reference to the annexed figures, the kit - which is indicated as a whole by the reference numeral 10 - comprises a catch unit 20 and a support 40 having fixing parts 42 for fixing the kit 10 to the refrigerator (namely, to its case) or to the furniture cabinet.

The catch unit 20 is configured to elastically retain the door of the refrigerator's freezer compartment to prevent door bumping, while enabling opening and closing of the door during its normal use.

The catch unit 20 is mounted on the support 20 so as to project from an upper surface 44 thereof in a catching direction Z transversal to the upper surface 44.

The support 40 has a base 43 for resting on a surface of the refrigerator or of the furniture cabinet suited to receive and support the kit 10; base 43 is configured to enable the support 40 to orient the catch unit 20 in the catching direction Z when the kit is received on the above-said surface of the refrigerator or of the furniture cabinet. Incidentally, it can be noted that surface 44 constitutes an outer boundary surface of the support 40 that gets closest to the door of the refrigerator.

In one or more preferred embodiments, such as the one illustrated, the fixing parts 42 are provided in the base 43 of the support 20.

In one or more preferred embodiments, such as the one illustrated, the catch unit 20 comprises a screw 24 threadedly engaging in a hole 46 of the support 40, which opens on the upper surface 44.

The catch unit 20 also comprises a catch member 26 which is movably received in an axial cavity 24A of the screw 24 and is hold at a projecting position by an elastic member 25 which is also received in the axial cavity 24A and is configured to exert an elastic force on the catch member 26 in the catching direction Z, so as to contrast any movement thereof in the opposite direction.

In the projecting position, the catch member 26 at least partially projects out of the axial cavity 24A for engaging the door of the refrigerator.

Preferably, the catch member 26 is a spherical body.

The spring element 25 may be a compression spring.

In one or more preferred embodiments, such as the one illustrated, the axial cavity 24A of the screw 24 has a narrowed open end 24B stopping at a maximum projecting position the catch member 26 pushed by the spring element 25 and impeding the catch member 26 to leave the axial cavity 24A.

Incidentally, it can be noted that the spring element 25 is arranged inside the axial cavity 24A, between the catch member 26 and a closed end 24C of the axial cavity that is opposite to the narrowed open end 24B.

At its end opposite to the catch member 26, the screw 24 is provided with a seat 24D for receiving a tool for screwing or unscrewing the screw 24 in the hole 46.

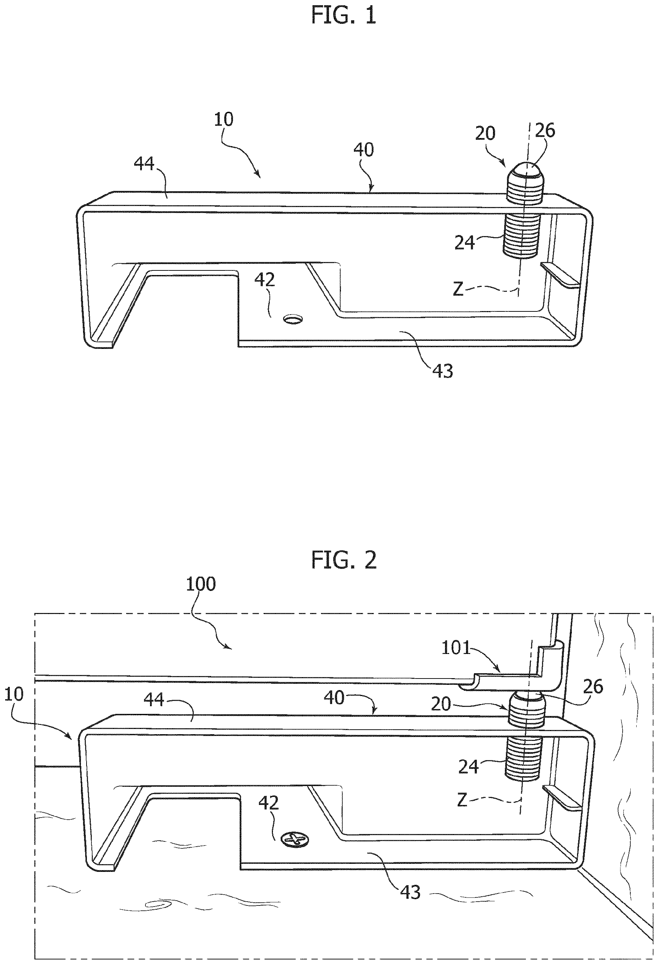

In the installed condition of the kit (see figure 2), the catch member 26 is intended to engage the door 100 of the refrigerator's freezer compartment so as to hold it in place and avoid an inadvertent opening thereof when those circumstances discussed at the beginning occur that might otherwise cause the door bumping phenomenon.

At the same time, opening and closing of the door in normal use is guaranteed by the catch member 26 being able to recede into the axial cavity 24A whenever the force opposed by the spring element 25 is surpassed by the forces exerted by the user on the door.

It can now be noted that the kit 10 described here enables to easily bring the catch member 26 to engage the door, and to select the resistance that is to be opposed by the catch member 26 against the opening of the door.

In fact, by screwing and unscrewing the screw 24 in the hole 46, the length of the catch unit's portion projecting in the catching direction Z from the upper surface 44 can be varied, and in this way, for any specific application, the position of the catch member 26 can be selectively adjusted to bring it into contact with the door, based on where the latter effectively happens to be found.

Then, once the catch member 26 is set into contact with the door, by unscrewing screw 24 in the hole 46 the spring element 25 can be compressed to increase the force it exerts on the catch member 26, so that the installer can actually select the level of resistance that the kit 10 will oppose to the opening of the door.

Incidentally, the person skilled in the art will understand that this unscrewing of screw 24 contemporarily results in a gradual sinking of the catch member 26 into the axial cavity 24A; therefore, the resistance adjustment can proceed as long as at the same time the catch member 26 remains projecting enough from screw 24 to be able to elastically engage the door.

Preferably, the catch member 26 is configured to engage a recess that is usually to be found in a corner cap 101 of the door of refrigerators (see figure 2), so that the kit can be installed and used also with refrigerators already in services, without the necessity of making modifications to their structure.

The corner cap above indicated is usually arranged against the door's lower corner that is at the side opposite to where the door hinges are arranged.

The kit can thus operate on the door with a very advantageous leverage, considering its distant position with respect to the door's axis of rotation.

The fixing parts 42 of the kit's support 40 are configured for enabling fixing of the kit 10, either to the furniture cabinet or to the case of the refrigerator, in a position such that the catch member 26 can effectively engage the door where it is supposed to. The support 40 can have different dimensions and shapes depending on the space constraints and geometry requirements of the specific applications.

For example, if the catch member is supposed to engage the corner cap above indicated, the fixing parts 42 shall be configured for enabling fixing of the kit 10 in a region adjacent to the above-said lower corner of the door.

The refrigerator usually has its own fixing parts through which it is fixed to the furniture cabinet, usually with the aid of screws. For example, the refrigerator may have connection flanges having holes to be aligned with internal holes made in a wall of the cabinet; fixing screws engage the holes of the refrigerator's connection flanges and are inserted into the internal holes of the cabinet to fix the refrigerator to the cabinet.

In this regard, in one or more preferred embodiments, such as the one illustrated, the fixing parts 42 of the support 40 may be configured to overlie the fixing parts of the refrigerator and to enable the kit 10 to be fixed to the wall of the cabinet by means of the same screws fixing the refrigerator.

For example, the fixing parts 42 may have holes aligning with the holes provided in the fixing parts of the refrigerator.

In view of the above, it is evident how the kit 10 described here can be used for preventing door bumping in a cooling device, and how it can be easily and effectively adopted either for new installations of cooling devices and for retrofitting cooling devices already in service.

The method here described for preventing door bumping in a cooling device, such as e.g. a refrigerator, makes use of the anti-door-bumping kit 10 described above.

In particular, the method in question includes the following steps:
- providing the kit 10;
- fixing the support 40 of the kit 10 to the cooling device or to the furniture cabinet inside which the cooling device is housed;
- engaging the door of the cooling device with the catch unit 20 of the kit 10 by adjusting the length of the portion of the catch unit 20 projecting from the upper surface 44 of the support 40 in the catching direction Z.

In a preferred embodiment, engaging the door of the cooling device includes:
- screwing or unscrewing the screw 24 in the hole 46 of the support 40 to bring the catch member 26 into contact with the door;
- screwing or unscrewing the screw 24 in the hole 46 so as to adjust the resistance that the catch member 26 is to oppose against the opening of the door.

Clearly, provided that the principle of the invention is retained, the details of construction and forms of embodiment can be varied, even to a significant degree, from what has been illustrated herein purely by way of non-limiting example, without thereby departing from the scope of the invention, as defined in the attached claims.

## Claims

1. Anti-door-bumping kit (10) for a cooling device, such as, e.g., a refrigerator, comprising:
- a spring-operated catch unit (20) for elastically retaining a door of the cooling device to prevent door bumping, while enabling opening and closing of the door during its normal use, and
- a support (40) having an outer boundary surface (44) intended to face the door of the cooling device in the installed condition of the kit (10), the catch unit (20) being mounted on the support so as to project from the outer boundary surface (44) of the support (40) in a catching direction (Z) transversal to the outer boundary surface (44),
wherein the support (40) has fixing parts (42) for fixing the kit (10) to the cooling device, or to a cabinet inside which the cooling device is housed, and
wherein the catch unit (20) is mounted on the support (40) so as to enable to adjust the length of its portion projecting from the outer boundary surface (44) of the support (40) in the catching direction (Z), for bringing the catch unit into engagement with the door of the cooling device when installing the kit.

2. Kit according to claim 1, wherein said catch unit (20) comprises a screw (24) which threadedly engages in a hole (46) of the support (40) opening on the outer boundary surface (44), and a catch member (26) which is movably received in an axial cavity (24A) of the screw (24) and is hold at a projecting position by an elastic member (25), in said projecting position said catch member (26) at least partially projecting out of the axial cavity (24a) for engaging the door of the cooling device,
wherein by screwing or unscrewing the screw (24) in the hole (46) of the support (40) the length of the portion of the catch unit (20) projecting from the outer boundary surface (44) of the support (40) in the catching direction (Z) can be varied.

3. Kit according to claim 2, wherein, when the catch member (26) engages the door, by screwing or unscrewing the screw (24) in the hole (46) of the support (40) the force exerted by the catch member (26) on the door of the cooling device can be varied.

4. Kit according to claim 2 or 3, wherein the spring element (25) is also received in the axial cavity (24A) of the screw (24) and is configured to exert an elastic force on the catch member (26) in the catching direction (Z), so as to contrast any movement thereof in the opposite direction.

5. Kit according to any one of claims 2 to 4, wherein the axial cavity (24A) of the screw (24) has a narrowed open end (24B) stopping the catch member (26) at a maximum projecting position and impeding the latter to leave the axial cavity (24A).

6. Kit according to any one of claims 2 to 5, wherein the spring element (25) is arranged inside the axial cavity (24A), between the catch member (26) and a closed end (24C) of the axial cavity (24A), opposite to the narrowed open end (24B).

7. Kit according to any one of the preceding claims, wherein the catch unit (20) is configured to engage a recess provided in a corner cap of the door of the cooling device.

8. Kit according to any one of the preceding claims, wherein the fixing parts (42) of the support (40) are configured to be fixed to the device, or to the cabinet, by means of a number of screws.

9. Kit according to claim 8, wherein the fixing parts (42) of the support (40) are configured to overlie fixing parts of the cooling device and to enable the kit (10) to be fixed to the cabinet by means of the same screw or screws fixing the refrigerator.

10. Method for preventing door bumping in a cooling device, such as, e.g., a refrigerator, the method including:
- providing a kit (10) according to any one of the preceding claims;
- fixing the support (40) of the kit (10) to the cooling device or to the cabinet inside which the cooling device is housed;
- engaging the door of the cooling device with the catch unit (20) of the kit (10) by adjusting the length of the portion of the catch unit (20) projecting from the outer boundary surface (44) of the support (40) in the catching direction (Z).

11. Method according to claim 10, wherein engaging the door of the cooling device includes:
- screwing or unscrewing the screw (24) in the hole (26) of the support (40) to bring the catch member (26) into contact with the door;
- screwing or unscrewing the screw (24) in the hole (46) so as to adjust the resistance that the catch member (26) is to oppose to the opening of the door.

12. Method according to claim 10 or 11, wherein engaging the door of the cooling device includes engaging by means of the catch member (26) a recess provided in a corner cap of the door of the cooling device.

13. Method according to any one of claims 10 to 12, wherein fixing the support (40) of the kit includes arranging fixing parts (42) of the support (20) of the kit to overlie fixing parts of the cooling device and fixing the kit to the cabinet by means of screw or screws fixing the cooling device to the cabinet.
